Europäisches Patentamt

(19) European Patent Office

Office européen des brevets

(11) Publication number: **0 200 385**

**A2**

## (12) EUROPEAN PATENT APPLICATION

(21) Application number: 86302546.6

(51) Int. Cl.4: **D04H 5/08 , D06M 17/00**

(22) Date of filing: 07.04.86

The title of the invention has been amended (Guidelines for Examination in the EPO, A-III, 7.3).

(30) Priority: 04.09.85 GB 8521933
13.04.85 GB 8509540

(43) Date of publication of application:
10.12.86 Bulletin 86/45

(84) Designated Contracting States:
AT BE CH DE FR GB IT LI LU NL SE

(71) Applicant: **Heinsco Limited**
**Unit 4 Halfpenny Bridge Industrial Estate**
**Oldham Road**
**Rochdale Lancashire, OL11 1NS(GB)**

(72) Inventor: **Heins, Garry**
**Brooklyn Newhay**
**Rochdale Lancashire(GB)**
Inventor: **Jackson, Peter David**
**50 Wiltshire Road**
**Chadderton Oldham Lancashire(GB)**

(74) Representative: **McNeight, David Leslie et al**
**Eurolink Regent House Heaton Lane**
**Stockport Cheshire SK4 1BS(GB)**

(54) Method for stabilizing woven, knitted and non-woven fabrics, and fabrics stabilized by this method.

(57) A fabric suitable inter alia for making pre-pregs or for making preforms for subsequent resin impregnation comprises an assembly of fibres which have no or insufficient woven coherence to form a stable fabric, the fibres of said fabric being bound together and supported by a fibre porous web for example of fine fibre structure.

EP 0 200 385 A2

Rank Xerox

## STABLE FABRICS

This invention relates to fabrics and methods for making them. In particular, the invention relates to fabrics made from fibre assemblies which have no or insufficient woven coherence to form a stable fabric, and including fabrics whose principal component comprises an assembly of filaments in parallel relationship.

By woven coherence is meant essentially a resistance to simply falling apart which resistance stems from the fact that fibres filaments or yarns making up the fabric are interlaced or interwoven with other fibres, filaments or yarns. Most woven and knitted constructions have an adequate woven coherence. Examples of fibre assemblies having no woven coherence are parallel assemblies of filaments such as a filament sheet or even a warp sheet, random laid assemblies of fibres such as a chopped strand mat. Examples of fibre assemblies having inadequate woven coherence are open weave structures especially of twistless, ribbon-like fibre assemblies, and so-called stitch knitted fabrics which are made by knitting fibre loops pulled out by compound needles from a fleece such as a cross-folded card web.

Such fabrics are commonly used in the production of reinforced plastics laminates and composites, and some may only have maximum strength and elastic modulus if strict parallelism of the filaments is maintained throughout their production, that is throughout the impregnation and laying up processes, to be retained in the final product. Other such fabrics may comprise random or loosely woven or knitted fibre and/or filament assemblies.

Conventional such fabrics whether of a woven or other construction are unstable and cannot be easily handled or shaped without disturbing the parallel relationship of the constituent filaments. At the same time, it is necessary to afford the impregnating material good access to the fibres.

Attempts to overcome this problem, typified by, for example, European Patent Publication No. 0 072 453, have included bonding the filaments together in transversely extending strips at spaced intervals along the direction of lay of a unidirectional fabric. Although an improvement on wholly unsupported assemblies, these fabrics remain unstable in the areas between adjacent bonded strips.

The present invention provides a fabric which is stable over its entire area to resist disturbance of the parallel relationship of the constituent filaments throughout all normally encountered handling and shaping operations.

The invention comprises a fabric comprising an assembly of fibres which have no or insufficient woven coherence to form a stable fabric, the fibres of said fabric being bound together and supported by a fine porous web.

Said porous web may extend over one or both faces of the fabric. Such a web may also be arranged between two layers of fibre assembly - which need not both have no or inadequate woven coherence.

One of said layers may be a unidirectional filament assembly. Both layers may be of unidirectional fibre assemblies, with different orientations, for example with their filaments at right angles -this gives a fabric which has both warp and weft strength.

The fibre assembly may comprise a randomly oriented chopped strand or a loosely woven or knitted, for example a stitch knitted fabric.

The fine porous web may be a web of fine thermoplastic fibres for example of polyamide or polyester. A weight of between 4 and 20 grams/sq. metre is suitable, but lesser and greater weights may well be suitable for some purposes.

The fabric may be made according to the invention by the fine porous web being of thermoplastic fibre and being thermally bonded to the assembly of fibres. Or the web may be bonded to the fibres by a suitable adhesive.

Where the porous web is bonded between two fibre assemblies, it may be so bonded in a single bonding step, or the web may first be bonded to one assembly, and then be bonded to a second assembly (which may also have been bonded to another porous web).

Embodiments of fabrics and methods for making them according to the invention will now be described with reference to the accompanying drawings, in which:-

Figure 1 is a view of a first fabric, with layers cut away to reveal the layer arrangement,

Figure 2 is a diagrammatic illustration of a method for making such a fabric as is shown in Figure 1,

Figure 3 is a view cut away like Figure 1 of a second fabric,

Figure 4 is a diagrammatic illustration of a method for making such a fabric as is shown in Figure 3,

Figure 5 is a view as before of a third fabric, and Figure 6 is a diagrammatic illustration of a method for making the fabric shown in Figure 5.

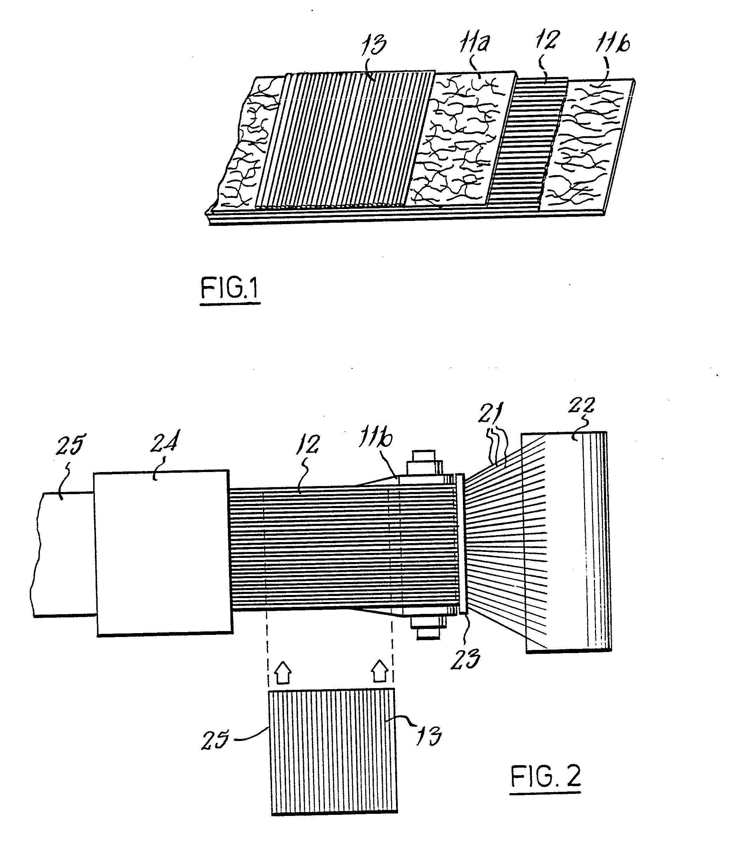

Figures 1, 3 and 5 illustrate fabrics comprising assemblies of fibres which have no or insufficient woven coherence to form a stable fabric, the fibres of said fabric being bound together and supported by fine porous webs 11.

Figure 1 illustrates a fabric comprising two unidirectional filament assemblies 12, 13, of which the filaments are arranged at right angles. A fine porous web 11a is sandwiched between the two fibre assemblies 12, 13 and a second such web 11b is bonded to the open face of the assembly 12.

The fine porous webs can be of thermoplastic fibre such as polyamide or polyester and can have a weight of around 10 grams per square metre.

The method of production is shown in Figure 2. A parallel assembly of filaments into a warp sheet 18 is made by leading filaments 21 from a creel 22 through a reed 23 and overlaying them on a fine web 11 of fibres of polyamide or polyester. The web 11b can be a card web or a random laid web. The web 11b and the sheet 12 are thermally bonded under heat and pressure in a laminator 24. The resulting fabric 25 is now cut into lengths equal to the width of the fabric required -which will in general be the same as the fabric 25 so that such fabric will essentially be cut into squares. The process is now repeated except that in addition to the web 11b underlying the warp sheet 12 the squares of fabric 25 are now placed on the thermobonded web 11 on such warp sheet before it enters the laminator 24, with their own thermobonded web 11 on the side facing towards the warp sheet 12.

The resulting fabric has both lengthwise and transverse strength.

A fabric comprising only one unidirectional layer of filaments may be produced, of course, by the above described method.

The filaments may in either case be of carbon, glass, aramid, polyester or any other fibre such as a high modulus fibre or a blend.

Typical fabrics embodying the invention are as follows.

## Example I

33 ends of 400 tex carbon fibre roving evenly distributed over a width of 75 mm to give a tape of 175 gms/sq. metre bonded on each face to a web of polyamide fibre of 14 gms/sq. metre.

## Example II

72 ends of 600 tex glass fibre roving evenly distributed over a width of 75 mm to give a tape of 570 gms/sq. metre bonded on each face to a web of polyester fibre of 12 gms/sq. metre.

## Example III

105 ends of 110 tex Aramid (e.g. Kevlar - RTM) roving evenly distributed over 100 mm to give a tape of 115 gms/sq. metre bonded on each side to a web of polyamide fibre of 4 gms/sq. metre.

It is of particular advantage if the fine porous web is made for example of fine fibres which bond to the assembly of fibres or filaments at discrete locations such as will leave the entire structure open to the influx of an impregnating resin with direct access to the fibre surfaces without the interposition of any alien material (such as the material of the fine porous web itself melted down and covering substantial portions of the assembly of fibres or filaments). Such a structure is particularly adapted to resin impregnation as compared, say, to a conventional woven textile which will, for the weaving, have a substantial loading of starch size or a conventional woven glass fibre, which requires extremely thorough chemical treatment and drying before being adapted for resin impregnation.

In addition to fibre forming polymers with linear chain molecules in fibre form, other polymers could be used for example phenolic or epoxide resins which, although they do not ordinarily form fibres suitable for textile fibres, may nevertheless be extruded as such and will appear as fibres or fibrils over short lengths.

Otherwise, such (or indeed any other) suitable resinous composition may be printed in fibrous form on to a transfer surface or may be made into an open cell foam structure which will have the effect of an interconnected fibrous mat which can bond to the fibre or filament assembly but not coat the same to any great extent and which will afford penetration and access to the surface of the fibres by the resin impregnant.

It may be preferable in some cases if the porous film is lifted from the fibre or filament surfaces by the liquid resin on impregnation as by melting or dissolving thereinto, so as to free all of the said fibrous or filament surfaces from any manner of covering so that they are all available to contact and interact with the resin matrix.

The idea here is to give, using the fine porous layer, the fibre or filament assembly, whether it be an assembly of fibres or filaments arranged simply in a plane parallel configuration or a multilayer assembly thereof or even a random laid assembly, a coherence and integrity that will enable it to maintain a temporary stability enough to withstand regular handling and even moulding forces without disturbing the regular or random arrangement of fibres or filaments.

Selection of the resin system in conjunction with knowledge of the fibre or filament assembly and the processing conditions can be effective to control the movement of the fibre or filament assembly.

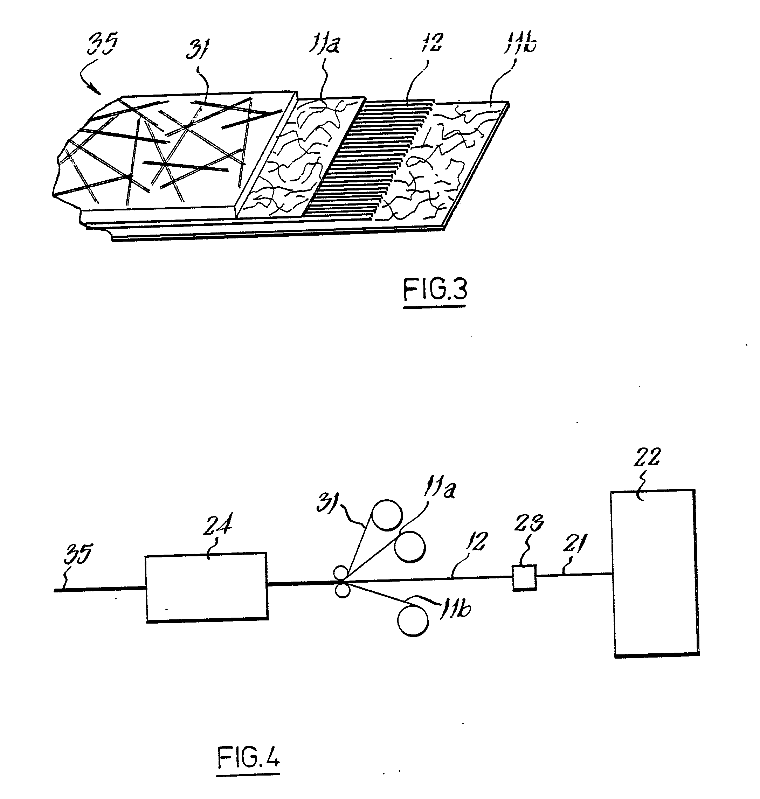

Figure 3 illustrates another composite fabric 35 comprising a chopped strand mat 31 in place of the transversely aligned sheet 13 of Figure 1. Such fabric can be made in a single operation as shown in Figure 4, by feeding the warp sheet 12 between webs 11b and 11a and overlying them with the chopped strand mat 31, all being assembled prior to entering the laminator 24.

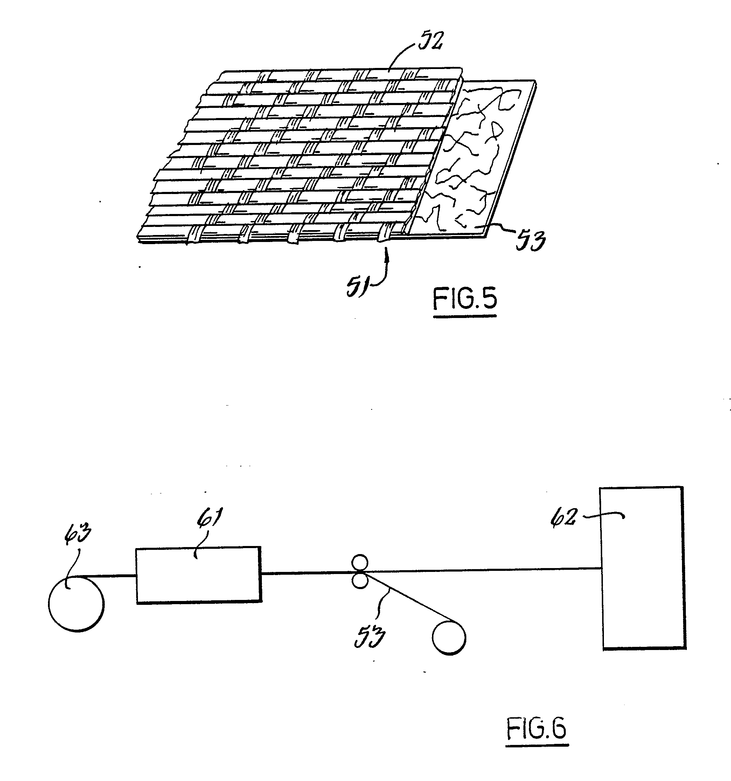

Figure 5 illustrates a loosely woven fabric 51 made of flat ribbons 52 of continuous filaments in a satin weave, thermally bonded with a web 53 of fine thermoplastic filaments. For fabrics which are too loosely woven to withstand much handling, the thermobonding can take place as the fabric comes off the loom as shown in Figure 6, where the laminator 61 (a hot roll press) is situated between the loom 62 and the take up roller 63.

The loom 62 could of course be replaced by a knitting machine, or a stitch knitting machine such for example as a Malivliess or Arabeva machine.

An advantage of using a single-sided lamination of a fine porous web on a loosely woven or knitted fabric over conventional methods such as spraying or dipping is that a more intimate bonding is effected using less of the bonding material, and leaving one face of the fabric completely free of bonding material so that it has an improved appearance.

Since the thermoplastic material is on one face of each of the fabrics described with reference to Figures 1, 3 and 5, it is available (as indeed described in connection with Figures 1 and 2) for thermobonding to further layers to produce preforms for subsequent resin injection moulding.

**Claims**

1. A fabric comprising an assembly of fibres which have no or insufficient woven coherence to form a stable fabric, the fibres of said fabric being bound together and supported by a fine porous web.

2. A fabric according to claim 1, in which said porous web extends over one face of the fabric.

3. A fabric according to claim 1, in which said porous web extends over both faces of the fabric.

4. A fabric according to any one of claims 1 to 3, having a fine porous web between two layers of fibre assembly.

5. A fabric according to claim 4, in which at least one of said layers is a unidirectional assembly of filaments.

6. A fabric according to claim 5, in which both said layers are unidirectional assemblies of filaments, with different orientations.

7. A fabric according to claim 6, in which said assemblies are arranged with their filaments at right angles.

8. A fabric according to any one of claims 1 to 7, comprising a randomly oriented chopped strand mat.

9. A fabric according to any one of claims 1 to 8, comprising a loosely woven or knitted fabric.

10. A fabric according to any one of claims 1 to 9, in which the fine porous web is a web of fine thermoplastic fibres.

11. A fabric according to claim 10, in which the web is of polyamide.

12. A fabric according to claim 10, in which the web is of polyester.

13. A fabric according to any one of claims 1 to 12, in which the web has a weight of between 4 and 20 grams per square metre.

14. A method for making a fabric comprising bonding a fine porous web to an assembly of fibres which have no or insufficienr woven coherence to form a stable fabric.

15. A method according to claim 14, said porous web being of fine thermoplastic fibre.

16. A method according to claim 14 or claim 15, said porous web being thermally bonded to said assembly of fibres.

17. A method according to any one of claims 15 to 16, in which a fine porous web is bonded between two fibre assemblies.

18. A method according to claim 17, in which a fine porous web bonded to a fibre assembly is subsequently bonded to another fibre assembly so as to be sandwiched between the two said assemblies.

19. A method according to claim 17, in which a fine porous web is bonded between two fibre assemblies in a single bonding step.

20. A fabric produced by a method according to any one of claims 15 to 19.

13 11a 12 11b

## FIG.1

25 24 12 11b 21 22

23

25 13

## FIG. 2

FIG.3

FIG.4

FIG.5

FIG.6